(19) Europäisches Patentamt
European Patent Office
Office européen des brevets

(11) **EP 1 723 331 B1**

(12) **EUROPÄISCHE PATENTSCHRIFT**

(45) Veröffentlichungstag und Bekanntmachung des Hinweises auf die Patenterteilung:
**24.02.2010 Patentblatt 2010/08**

(21) Anmeldenummer: **05708065.7**

(22) Anmeldetag: **01.03.2005**

(51) Int Cl.:
*F02D 41/34* *(2006.01)*    *G01M 15/00* *(2006.01)*
*G01D 5/00* *(2006.01)*

(86) Internationale Anmeldenummer:
**PCT/EP2005/050862**

(87) Internationale Veröffentlichungsnummer:
**WO 2005/083252 (09.09.2005 Gazette 2005/36)**

(54) **VERFAHREN UND VORRICHTUNG ZUR ERMITTLUNG EINES WINKELLAGESIGNALS BEI EINER BRENNKRAFTMASCHINE**

METHOD AND DEVICE FOR DETECTING THE ANGULAR POSITION SIGNAL IN AN INTERNAL COMBUSTION ENGINE

PROCEDE ET DISPOSITIF POUR DETERMINER UN SIGNAL DE POSITION ANGULAIRE DANS UN MOTEUR A COMBUSTION INTERNE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **01.03.2004 DE 102004010441**

(43) Veröffentlichungstag der Anmeldung:
**22.11.2006 Patentblatt 2006/47**

(73) Patentinhaber: **ROBERT BOSCH GMBH**
**70442 Stuttgart (DE)**

(72) Erfinder:
• **RAICHLE, Franz**
**70825 Korntal-Muenchingen (DE)**
• **FISCHER, Wolfgang**
**70839 Gerlingen (DE)**
• **BREUNINGER, Joerg**
**71282 Hemmingen (DE)**
• **HAMEDOVIC, Haris**
**71696 Möglingen (DE)**

(56) Entgegenhaltungen:
**DE-A1- 10 113 194    US-A- 5 611 311**

**Beschreibung**

Stand der Technik

Die Erfindung betrifft ein Verfahren und eine Vorrichtung zur Ermittlung eines Motordrehzahlsignals mit den Merkmalen der unabhängigen Ansprüchen.

Bei modernen Verbrennungsmotoren liefert das Drehzahlsignal Informationen von zentraler Bedeutung für die Motorsteuerung, Diagnose sowie Optimierung bezüglich verschiedener Kriterien. Die Motordrehzahl wird nach dem Stand der Technik mit Hilfe eines an der Kurbelwelle angebrachten Geberrads gemessen, das eine bestimmte Anzahl von Markierungen aufweist. Die einzelnen Markierungen bzw. Inkremente werden mittels eines Sensors erfasst.

Die Geberräder weisen in der Regel toleranzbedingte Geometrie- sowie Einbaufehler auf. Diese verursachen einen systematischen Fehler, der eine weitere Verwendung des Drehzahlsignals wesentlich verschlechtert oder unter Umständen für bestimmte Funktionalitäten sogar unbrauchbar macht. Daher ist eine Identifikation und Kompensation dieser Fehler von essentieller Bedeutung.

In diesem Zusammenhang sind einige Verfahren bekannt:

Aus der DE 100 17 107 A1 ist eine Methode bekannt, mit der die Geberradfehler bis auf die Frequenzanteile auf den Hauptordnungen des Motors kompensiert werden können. Es wird die Tatsache ausgenutzt, dass die Drehunförmigkeit des Verbrennungsmotors nur die erwähnten Frequenzanteile aufweist. Diese werden geschätzt und aus dem Drehzahlsignal entfernt. Die restlichen Schwankungen werden auf die Einflüsse der Geberradfehler zurückgeführt.

In DE 197 33 958 A1 und der WO 01/77692 wird eine segmentbezogene Korrektur des Drehzahlsignals mit geringer Winkelauflösung durchgeführt.

In der DE 101 07 892 A1 werden die Drehunformigkeiten modellbasiert aus dem Saugrohrdruck, Abgasgegendruck, Umgebungsdruck, Motorgeometrie und den Steuerzeiten geschätzt und daraus mit dem gemessenen Drehzahlsignal die einzelnen Geberradfehler berechnet.

Das in der WO 03/062620 vorgestellte Verfahren geht davon aus, dass sich die auf die Welle einwirkenden Gas- und Massenmomente bei einer Mittelung innerhalb eines bestimmten Drehzahlbereiches zumindest weitgehend statistisch aufheben. Aufgrund des somit erhaltenen mittleren Winkelgeschwindigkeitsverlaufes werden die Geometriefehler des Geberrads ermittelt.

Moderne Systeme für Otto- und Dieselmotoren ermöglichen den zylinderindividuellen Zugriff auf Kraftstoff- und Luftpfad. Zur vollständigen Nutzung des verfügbaren Potenzials für die Reduzierung von Verbrauch und Emissionen benötigt das Motormanagement Rückmeldungen über die tatsächlichen Vorgänge im Brennraum. Für die Realisierung von Funktionen der zylinderindividuellen Motorsteuerung und -regelung stellt der Brennraumdruckverlauf eine zentrale Größe dar. Auch nach einer möglichen Verfügbarkeit eines serientauglichen Brennraumdrucksensors wird aus Kostengründen und aufgrund von Bauraumbeschränkungen die Indizierung aller Zylinder eines Motors nicht immer möglich sein.

Aus der US-PS 5,611,311 ist ein Verfahren zur Ermittlung eines die Drehbewegung eines rotierenden Teils einer Brennkraftmaschine repräsentierenden Winkellagesignalgebers bekannt. Dabei wird das Ausgangssignal des Winkellagesignalgebers, der ein Geberrad abtastet. Zusätzlich ist wenigsten ein Drucksensor vorhanden, der den Druck in einem Brennraum der Brennkraftmaschine ermittelt. Zur Korrektur des Signals des Winkellagesignalgebers wird aus dem erfassten Drucksignal eine Korrekturgröße gebildet und diese mit dem Winkellagesignal verknüpft.

Vorteile der Erfindung

Die vorliegende Erfindung betrifft ein Verfahren zur Ermittlung eines die Drehbewegung nach Anspruch 1

Der Kern der Erfindung liegt in der Identifikation und Kompensation der Geberradfehler durch gemeinsame Auswertung des Drehzahlsignals und des Brennraumdrucks eines oder mehrerer indizierter Zylinder. Vorteilhaft können Geberradfehler beliebiger Motorordnungen mit sehr hoher Genauigkeit und Zuverlässigkeit kompensiert werden. Es werden die Fehler jedes einzelnen Inkrements identifiziert. Die Messung des Brennraumdrucks in einem oder mehreren Zylindern ermöglicht eine sehr genaue Modellierung der verbrennungsrelevanten Drehunförmigkeiten und somit einen Gewinn bezogen auf die Genauigkeit der Identifikation.

In einer vorteilhaften Ausgestaltung der Erfindung ist vorgesehen, dass die Bildung der Korrekturgröße wenigstens abhängig von dem gleichzeitig erfassten Drucksignal und Drehmesssignal stattfindet.

Weiterhin kann vorgesehen sein, dass das Drucksignal wenigstens während eines vorgebbaren Betriebszustandes der Brennkranmaschine erfasst wird und die Bildung der Korrekturgröße wenigstens abhängig von dem während eines vorgebbaren Betriebszustands der Brennkraftmaschine erfassten Drucksignals und Drehmesssignals stattfindet. Besonders vorteilhaft ist es hierbei, dass der vorgebbare Betriebszustand ein stationärer Schleppbetrieb der Brennkraftmaschine ist.

Es auch vorgesehen sein, dass der vorgebbare Betriebszustand ein Betriebszustand ist, während dem Störungen bestimmten Ausmaßes wie das Befahren einer Schlechtwegstrecke oder starke Störschwingungen nicht auftreten.

Die Beschränkung auf vorgebbare Betriebszustände wie den stationären Schleppbetrieb der Brennkraftmaschine kann entfallen, wenn über eine vorgebbare Anzahl, insbesondere über eine hinreichend große Anzahl, von Verbrennungsvorgängen gebildeten Korrekturgrößen zu einer resultierenden Korrekturgröße, insbesondere durch Mittelwertbildung, zusammengefaßt werden. Die Ermittelung des Winkellagesignals geschieht dann durch Verknüpfen des erfassten Drehmesssignals mit der resultierenden Korrekturgröße.

In einer besonders vorteilhaften Ausgestaltung der Erfindung ist vorgesehen, dass die Brennkraftmaschine wenigstens zwei Brennräume aufweist, wobei wenigstens einer der Brennräume keinen Drucksensor aufweist. Hierbei ist es besonders vorteilhaft, dass nur ein einziger Drucksensor zur Erfassung des Drucks in einem sogenannten Leitzylinder vorgesehen ist.

In einer anderen Ausführungsform der Erfindung ist vorgesehen, dass die Brennkraftmaschine wenigstens drei Brennräume aufweist, wobei wenigstens einer der Brennräume keinen Drucksensor aufweist. Insbesondere sollen dabei nur zwei Drucksensoren in den Brennräumen vorgesehen sein, wobei die Brennräume mit den Drucksensoren derart ausgewählt sind, dass die Verbrennungsvorgänge in diesen Brennräumen nacheinander ablaufen.

In einer vorteilhaften Ausgestaltung ist vorgesehen, dass die Bildung der Korrekturgröße weiterhin abhängig von der während der Erfassung vorliegenden Last der Brennkraftmaschine und/oder abhängig von der während der Erfassung vorliegenden Drehzahl der Brennkraftmaschine geschieht.

Neben dem Verfahren betrifft die Erfindung auch die Vorrichtung zur Durchführung des erfindungsgemäßen Verfahrens.

Weitere Ausgestaltungen sind den Unteransprüchen zu entnehmen.

Zeichnung

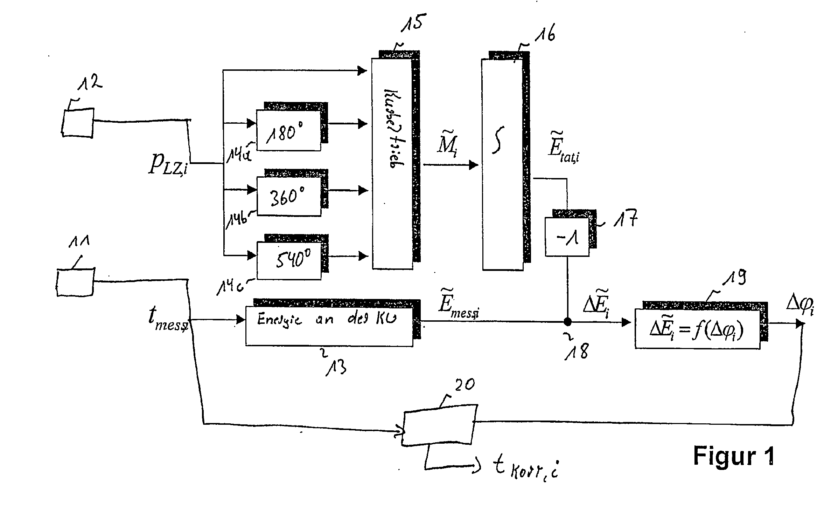

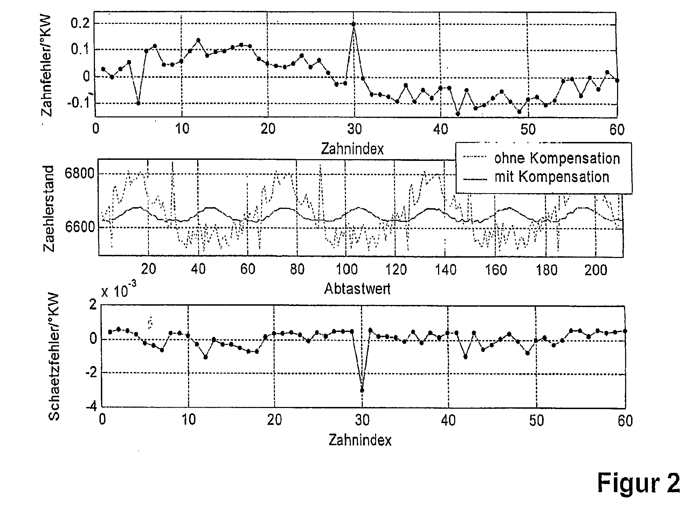

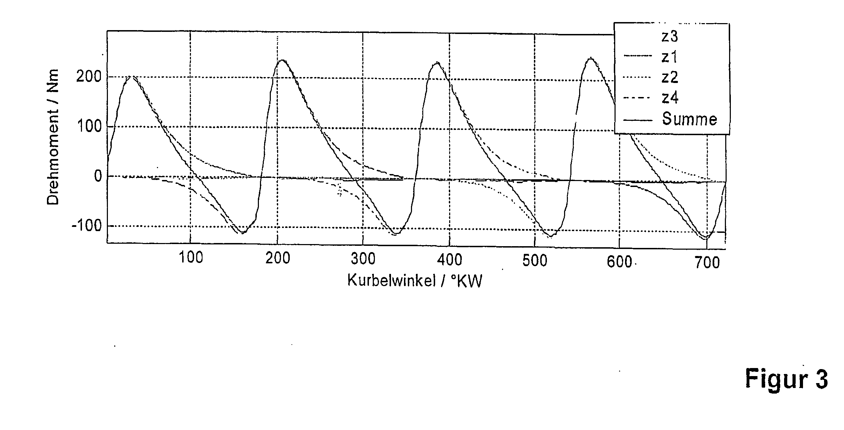

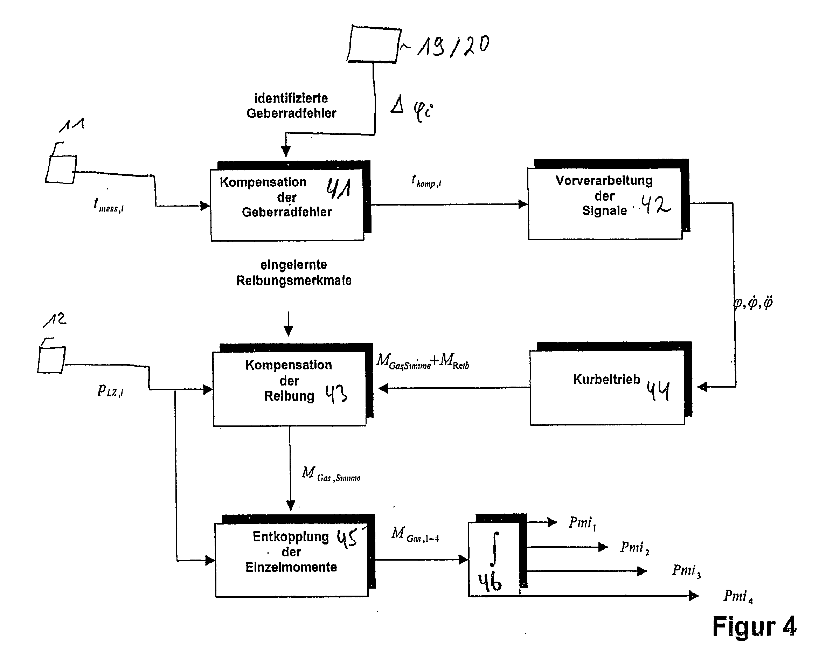

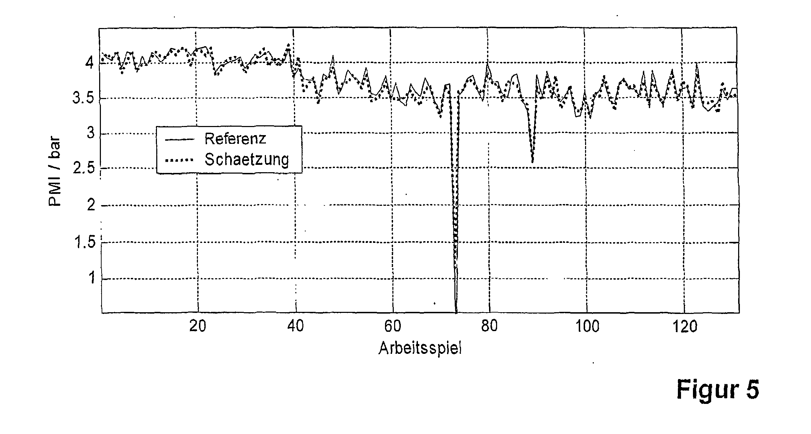

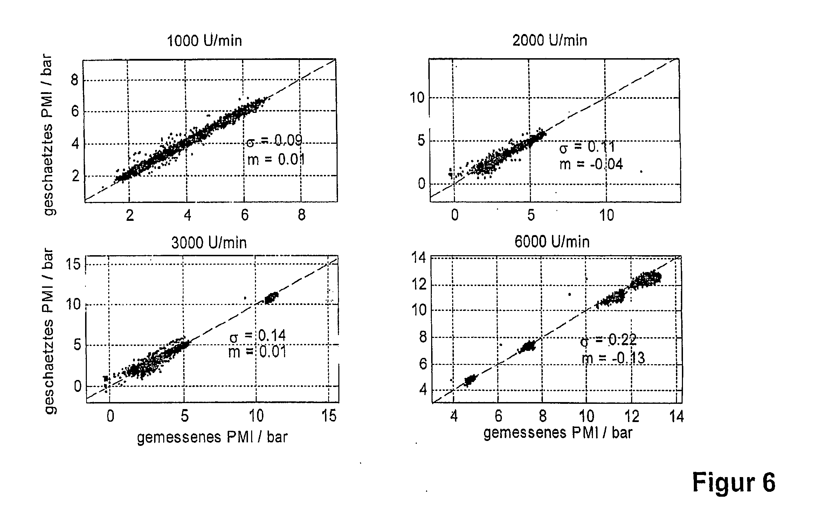

Die Figur 1 zeigt die Identifikation der Geberradfehler gemäß eines Ausführungsbeispiels anhand eines Blockschaltbildes. In der Figur 2 ist die Identifikation und der Einfluss der Geberradfehler dargestellt. Die Figur 3 veranschaulicht die Gasdrehmomente. Die Figur 4 zeigt das Prinzip der Schätzung des zylinderindividuellen indizierten Mitteldrucks. Die Figur 5 stellt die Schätzung des zylinderindividuellen indizierten Mitteldrucks einzelner Verbrennungen eines Zylinders bei 3000 Umdrehungen pro Minute dar. Die Figur 6 zeigt die Korrelation zwischen dem geschätzten zylinderindividuellen indizierten Mitteldruck Pmi und der Referenz aus gemessenem Druck.

Ausführungsbeispiel

In den folgenden Ausführungsbeispielen wird die Erfindung beispielhaft erläutert.

Wie eingangs schon erwähnt ermöglichen moderne Systeme für Otto- und Dieselmotoren den zylinderindividuellen Zugriff auf Kraftstoff- und Luftpfad. Zur vollständigen Nutzung des verfügbaren Potenzials für die Reduzierung von Verbrauch und Emissionen benötigt das Motormanagement Rückmeldungen über die tatsächlichen Vorgänge im Brennraum. Für die Realisierung von Funktionen der zylinderindividuellen Motorsteuerung und -regelung stellt der Brennraumdruckverlauf eine zentrale Größe dar. Auch nach einer möglichen Verfügbarkeit eines serientauglichen Brennraumdrucksensors wird aus Kostengründen und aufgrund von Bauraumbeschränkungen die Indizierung aller Zylinder eines Motors nicht immer möglich sein. Der Erfindung vorangegangen sind Untersuchungen darüber, ob mit einer reduzierten Anzahl an Drucksensoren, im besten Fall mit nur einem indizierten Leitzylinder, und Verwendung von vorhandenen Drehzahlinformationen die gewünschten verbrennungsrelevanten Druckmerkmale in der erforderlichen Genauigkeit gewonnen werden können.

Im Folgenden wird eine Methode zur Kompensation der Geberradfehler durch gemeinsame Auswertung des Drehzahlsignals und des Brennraumdrucks eines Leitzylinders präsentiert. Ausgehend von den Ergebnissen dieser Kompensation wird im Weiteren ein Verfahren beschrieben, das die Rekonstruktion des zylinderindividuellen indizierten Mitteldrucks Pmi jedes einzelnen Verbrennungsvorgangs ermöglicht. Anschließend werden die Ergebnisse anhand gemessener Daten vorgestellt und diskutiert.

Die zylinderindividuellen Pmi-Werte können für die Regelung, Steuerung, Überwachung und/oder Diagnose verwendet werden und stellen einen der zentralen Merkmale des Brennraumdrucks dar.

## 1. Drehzahlerfassung

Die Drehzahlerfassung erfolgt nach dem Periodendauermessprinzip mittels eines an der Kurbelwelle angebrachten 60-2-Geberrads. Dies bedeutet, dass das Geberrad 58 Zähne aufweist, wobei diese Zähne derart über den Umfang des Rades verteilt sind, dass von 60 gleichmäßig über den Umfang verteilten Zähnen zwei fehlen. Die zwei fehlenden Zähne ermöglichen eine Erkennung der Absolutlage des Geberrades, die sogenannte Bezugsmarke.

Die einzelnen Zähne werden von einem Drehzahlgeber 11 abgetastet und somit wird die Zeit $t_i$ zwischen den

Impulsen jeweils zweier aufeinander folgender Zähne des Geberrades erfasst. Daraus ergibt sich für die mittlere Winkelgeschwindigkeit des betrachteten Intervalls bei einem Geberrad mit $n$ Zähnen

$$\dot{\varphi}_i \approx \frac{2\pi}{n \cdot t_i} \qquad (1)$$

Im Zusammenhang mit dem Leitzylinderansatz werden primär die Schwankungen des Drehzahlsignals ausgewertet. Die Amplitude dieser Schwankungen beträgt in der Regel nur wenige Prozent des Gleichanteils. Aus diesem Grund werden höchste Anforderungen an die Genauigkeit der Signalerfassung gestellt.

Die Hauptstörung wird dabei durch toleranzbedingte Geometrie- sowie Einbaufehler des Geberrads verursacht. Abhängig vom jeweiligen Motor werden Toleranzgrenzen zwischen 0.1 und 0.3˚KW pro Zahnbreite vorgegeben, was einem Prozentsatz von 1,67 bzw. 5% entspricht Ein Geberradfehler $\Delta\varphi_i$ wirkt sich auf die Messung der Zahnzeit wie folgt aus:

$$\dot{t}_{mess,i} = \frac{2\pi / n + \Delta\varphi_i}{\dot{\varphi}_i} \qquad (2)$$

Für die daraus ohne Kenntnis des Zahnfehlers berechnete Winkelgeschwindigkeit $\dot{\varphi}_{mess,i}$ gilt:

$$\dot{\varphi}_{mess,i} = \frac{2\pi}{n \cdot t_{mess,i}} \qquad (3)$$

Die Geberradfehler $\Delta\varphi_i$ verursachen somit einen systematischen Fehler, der die Qualität der Drehzahlsignalverarbeitung wesentlich verschlechtert oder unter Umständen sogar unbrauchbar macht. Dies kann anhand der Figur 2 dargestellt werden. In der Figur 2 ist die Identifikation und der Einfluss der Geberradfehler dargestellt. Die Unterdrückung dieser Störgröße stellt eine essentielle Voraussetzung für eine erfolgreiche Auswertung der Drehzahldaten dar.

In der Figur 2 ist im oberen und unteren Teil der Geberradfehler (oberer Teil) und der Schätzfehler (unterer Teil) gegen den Zahnindex aufgetragen. Der mittlere Teil der Figur 2 zeigt den Zählerstand mit bzw. ohne Kompensation in Abhängigkeit von dem Abtastwert.

## 2. Kompensation der Geberradfehler

Die Energie des Kurbelwellentriebs setzt sich aus der kinetischen und potenziellen Energie zusammen. Die letztere kann für die betrachteten Motoren vernachlässigt werden. Unter dieser Annahme ergibt sich für die Energie E an der Kurbelwelle:

$$E(\varphi) = E_{Kin}(\varphi) + E_{Pot}(\varphi) \approx \frac{1}{2} \cdot \Theta(\varphi) \cdot \dot{\varphi}^2 \qquad (4)$$

wobei $\Theta(\varphi)$ das kurbelwinkelabhängige Trägheitsmoment des Motors darstellt. Das gemessene Drehzahlsignal $t_{mess,i}$ ist aber durch die Geberradfehler verfälscht, wodurch im winkeldiskreten Fall für die berechnete Energie, im Folgenden als $E_{mess}$ bezeichnet, gilt

$$E_{mess,i} = \frac{1}{2} \cdot \Theta_i \cdot \dot{\varphi}_{mess,i}^2 \qquad (5)$$

$E_{mess}$ wird in dem in der Figur 1 dargestellten Block 13 ermittelt. Einzelne Geberradfehler wirken sich also nach Gl. (2-4) direkt auf die Schwankungen vorn $E_{mess}$ aus. Der kurbelwinkelabhängige Verlauf der tatsächlichen Energie $E_{tat}$ wird physikalisch durch den Brennraumdruck der einzelnen Zylinder bestimmt. Bei dem vorliegenden Verfahren wird davon ausgegangen, dass die Wechselanteile der Reibung in dem zur Identifikation der Geberradfehler betrachteten Betriebspunkt vernachlässigbar klein sind und dass die Kurbelwelle hinreichend steif ist bzw. dass in dem zur Identifikatrion der Geberradfehler verwendeten Betriebspunkt keine Torsionsschwingungen angeregt werden. Unter diesen Bedingungen gilt nach:

$$\frac{dE}{d\varphi} = M_{Gas} - M_{Nutz} - M_{Reib} = \tilde{M}_{Gas} + \overline{M}_{Gas} - M_{Nutz}{}' - M_{Reib} \tag{6}$$

wobei das gesamte Gasmoment $M_{Gas}$ aus dem Mittelwert $\overline{M}_{Gas}$ und dem Wechselanteil $\tilde{M}_{Gas}$ besteht. Das resultierende Moment setzt sich also aus Gas-, Nutz-, und Reibungsmoment zusammen. Im stationären Betrieb bleibt die Winkelgeschwindigkeit der Kurbelwelle konstant

Daher gilt für das mittlere Drehmoment und die Wechselanteile der Energie:

$$\overline{M} = \overline{M}_{Gas} - M_{Nutz} - M_{Reib} = 0 \tag{7}$$

$$\tilde{E} = \int \tilde{M}_{Gas} \cdot d\varphi \tag{8, Block 16}$$

Das Gasdrehmoment wird wie folgt berechnet:

$$M_{Gas} = \sum_{k=1}^{z} (P_k(\varphi_k) - P_0) \cdot A \cdot (\sin\varphi_k + \frac{\lambda \cdot \sin\varphi_k \cdot \cos\varphi_k - \mu \cdot \cos\varphi_k}{\sqrt{1 - \lambda^2 \cdot \sin^2\varphi_k + 2 \cdot \lambda \cdot \mu \cdot \sin\varphi_k - \mu^2}}) \cdot r,$$

$$\tag{9, Block 15}$$

wobei z Anzahl der Zylinder, $P_k(\varphi_k)$ Zylinderdruck, $\varphi_k$ Kurbelwinkel bezogen auf den Zylinder k gemäß der Zündreihenfblge, $P_0$ Umgebungsdruck, A Kolbenfläche, $\lambda$ Pleuelstangenverhältnis, $\mu$ Desachsierungsverhältnis und r Kolbenradius kennzeichnet. Es lässt sich also bei bekanntem Druckverlauf aller Zylinder eine Referenz für die Wechselanteile der Energie $\tilde{E}_{tat}$ über das Modell des Kurbeltriebs (Block 15) berechnen. Das Desachsierungsverhältnis $\mu$ ist definiert als Quotient Desachsienmg/Pleuellänge. Die Desachsierung bezeichnet die Versetzung zwischen der Drehachse der Kurbelwelle und der Linie, längs der sich der Kolben bewegt.

Unter der Voraussetzung, dass die Verdichtungsverhältnisse und Füllungen der einzelnen Zylinder annähernd gleich sind, kann im stationären Schleppbetrieb davon ausgegangen werden, dass alle Zylinder identischen, jeweils um einen definierten Kurbelwinkel phasenverschobenen Brennraumdruck (Blöcke 14a, 14b und 14c) aufweisen. Daher ist es möglich, in diesem Betriebspunkt den Energieverlauf an der Kurbelwelle mit Hilfe des Leitzylinders zu berechnen. Wie in Figur 1 dargestellt, können somit die einzelnen Zahnfehler durch Auflösen der Gl. (10) nach $\Delta\varphi_i$ berechnet werden.

$$\tilde{E}_{mess,i} - \tilde{E}_{tat,i} = f(\Delta\varphi_i) \tag{10, Blöcke 17, 18 und 19}$$

wobei $f(\Delta\varphi_i)$ sich aus Gl. (1-5) ergibt. Zwecks Minimierung der Einflüsse stochastischer Störungen ist es empfehlenswert, eine Mittelung über einer größeren Anzahl von Zyklen durchzuführen.

Wurden die Geberradfehler einmal identifiziert und im Speicher (Teil des Blocks 20) abgelegt, so lässt sich mit Hilfe dieser im laufenden Betrieb eine Kompensation wie folgt durchführen:

$$t_{korr,i}^{irc} = t_{mess,i} \cdot \frac{2\pi / n}{2\pi / n + \Delta\varphi_i} \qquad (11, \text{Block } 20)$$

Ein Beispiel der Identifikation der Zahnfehler ist in der Figur 2 für eine Zahnfehlersimulation an gemessenen Daten dargestellt.

### 3. Schätzung des zylindcrindividuellen Mitteldrucks:

Die Berechnungen in Abschnitt 2 bezogen sich auf einen Betriebspunkt, in dem die Wechselanteile der Reibung als minimal bzw. vernachlässigbar angenommen wurden. Im folgenden wird keine Beschränkung bezüglich des betrachteten Arbeitspunkts vorgenommen. Daher müssen die Wechselanteile der Reibung berücksichtigt werden. Es wird weiterhin von einer hinreichend steifen Kurbelwelle ausgegangen.

Aus dem vom Geberradfehler bereinigten Drehzahlsignal lässt sich mit Gleichungen (4) und (6) das Drehmoment an der Kurbelwelle berechnen:

$$\frac{dE}{d\varphi} = \Theta \cdot \frac{d\dot{\varphi}}{d\varphi} \cdot \dot{\varphi} + \frac{1}{2}\frac{d\Theta}{d\varphi} \cdot \dot{\varphi}^2 = \tilde{M}_{Gas} + \overline{M}_{Gas} - M_{Nutz} - M_{Reib} - \tilde{M}_{Reib} \qquad (12)$$

Der Verlauf der Drehmomente kann auch im instationären Betrieb als hinreichend stationär betrachtet werden. Somit ergibt sich mit Gl. (7):

$$\tilde{M}_{Gas} = \Theta \cdot \frac{d\dot{\varphi}}{d\varphi} \cdot \dot{\varphi} + \frac{1}{2}\frac{d\Theta}{d\varphi} \cdot \dot{\varphi}^2 + \tilde{M}_{Reib} \qquad (13)$$

Das Reibungsmoment kann mit Hilfe modellgestützter Ansätze unter Verwendung genauer Motorparameter berechnet werden.

Eine andere Möglichkeit, die Wechselanteile der Reibung zu kompensieren, eröffnet sich mit dem Leitzylinderansatz. Drehzahlabhängige Anteile können, analog zur Identifikation der Geberradfehler, im Schleppbetrieb bei verschiedenen Drehzahlen durch einen Vergleich der aus der Drehzahl und aus dem Brennraumdruck berechneten Gasdrehmomentverläufe bestimmt werden. Weiterhin lässt sich im laufenden Betrieb aufgrund der Indizierung des Leitzylinders das gesamte Gasdrehmoment für die Dauer der Hochdruckphase des Leitzylinders mit hoher Genauigkeit schätzen. Somit ist es möglich, die aus dem Schleppbetrieb gewonnenen Verläufe der Reibung adaptiv an die jeweilige Last anzupassen.

Nach dieser Kompensation erhält man eine sehr genaue Schätzung für die Wechselanteile des gesamten Gasdrehmoments.

In der Figur 3 ist die Überlagerung der Gasmomente der einzelnen Zylinder (Zylinder Z1, Z2, Z3, Z4 sowie die Summe) für ein Arbeitsspiel exemplarisch dargestellt. Die Kenntnis des Brennraumdrucks des Leitzylinders ermöglicht eine Entkopplung der Gasdrehmomente einzelner Zylinder über das Modell des Kurbeltriebs. Dadurch lässt sich der indizierte Mitteldruck für jeden einzelnen Zylinder schätzen.

Dieser stellt ein Maß für die vom jeweiligen Zylinder geleistete Arbeit pro Hubvolumen V dar und wird wie folgt definiert:

$$Pmi = \frac{1}{V} \cdot \int_{AS} p(\varphi) \cdot dV = \frac{1}{V} \cdot \int_{AS} M_{Gas}(\varphi) \cdot d\varphi , \qquad (14)$$

wobei die Integrationsgrenzen den Kurbelwinkelbereich eines Arbeitsspiels darstellen.

Die Figur 4 zeigt das Prinzip der Schätzung des zylinderindividuellen indizierten Mitteldrucks.

Die einzelnen Zähne werden von einem Drehzahlgeber 11 abgetastet und somit wird die Zeit $t_{mess,i}$ zwischen den Impulsen jeweils zweier aufeinander folgender Zähne des Geberrades erfasst. Im Block 41 findet die Kompensation der Geberradfehler statt. Hierzu werden die einmal identifizierten und gespeicherten Geberradfehler (Block 19/20 in der Figur 1) berücksichtigt.

Im Block 42 wird das so korrigierte Zeitsignal $t_{korr,i} = t_{komp,i}$ in die Winkelsignale gewandelt und dem Block 44 zugeführt. Dort werden, wie anhand des Blocks 15 beschreiben, das Gesamtgasdrehmoment und das Reibungsmoment berechnet und dem Block 43 zugeführt.

Im Block 43 wird das Gesamtgasdrehmoment unter Berücksichtigung der Reibung ermittelt. Hierzu werden die durch den Drucksensor 12 erfassten Brennraumdrucksignale $p_{LZ,i}$ mit den sogenannten 'eingelernten Reibungsmerkmale' verknüpft Die 'eingelernten Reibungsmerkmale' werden nach einem der aus der Literatur bekannten Verfahren (siehe Rezeka, S.F., Henein,N.A.: A New Approach to Evaluate Instantaneous Friction and Its Components in Internal Combustion Engines. SAE Technical Paper Series, No. 840179, 1984) aus den Motorabmessungen vorab berechnet und in einem Speicher abgelegt

Im Block 45 werden die Einzelmomente entkoppelt, wodurch man zu den Gasdrehmomenten $M_{Gas,1-4}$ der einzelnen Zylinder gelangt.

Durch die Integration 46 gelangt man dann zu den zylinderindividuellen $P_{mi}$-Werten.

Das vorgestellte Verfahren wurde verifiziert durch Messungen mit zwei vollindizierten Otto-Motoren. Als Referenz wurde der aus dem gemessenen Brennraumdruck berechnete indizierte Mitteldruck verwendet. In den Figuren 5 und 6 sind die Ergebnisse an einem vierzylindrigen Benzindirekteinspritz-Motor mit 1.4 Liter Hubraum dargestellt. Die Figur 6 stellt die Korrelation der Schätzung mit der Referenz für verschiedene Drehzahlen dar, wobei σ die jeweilige Standardabweichung und $m$ den mittleren Schätzfehler darstellt. Zur Bildung der Statistik wurden insgesamt ca. 96 000 Verbrennungen verwendet. Die Werte des Leitzylinders wurden nicht einbezogen, da sie durch die Indizierung bereits bekannt sind.

Die Kombination der beiden vorgestellten Verfahren zur Kompensation der Geberradfehler und Schätzung des zylinderindividuellen Mitteldrucks bieten eine Rückmeldung aus dem Brennraum jedes einzelnen Zylinders. Dabei wird ein einzelner Drucksensor und das bereits vorhandene Drehzahlsignal verwendet Durch die gemeinsame Auswertung dieser Signale mit Hilfe der präsentierten Algorithmen eröffnen sich neue Möglichkeiten für eine kostengünstige zylinderindividuelle Motorsteuerung und -regelung sowie Verbesserung der bereits bestehenden Funktionen.

**Patentansprüche**

1.  Verfahren zur Ermittlung eines die Drehbewegung eines rotierenden Teils einer Brennkraftmaschine repräsentie-renden Winkellagesignals ($\dot{\varphi}_t$) mit einem Drehzahlsensor (11), der ein die Drehbewegung eines mit dem rotierenden Teil verbundenen Geberrades repräsentierendes Drehmesssignal ($\dot{\varphi}_{mess,i}$, $t_{mess,i}$) abgibt, und wenigstens einem Drucksensor (12), der ein den Druck in einem Brennraum repräsentierendes Drucksignal ($p_{LZ,i}$) abgibt, mit folgenden Schritten:

    - Erfassen des Drucksignals ($p_{LZ,i}$),
    - Erfassen des Drehmesssignal ($\dot{\varphi}_{mess,i}$, $t_{mess,i}$),
    - Bildung einer Korrekturgröße ($\Delta\varphi_i$) wenigstens abhängig von dem erfassten Drucksignal und Drehmesssignal, und
    - Ermitteln des Winkellagesignals ($\dot{\varphi}_i$) durch Verknüpfen des erfassten Drehmesssignals ($\dot{\varphi}_{mess,i}$, $t_{mess,i}$) mit der Korrekturgröße ($\Delta\varphi_i$), **dadurch gekennzeichnet, dass**
    - aus dem Drehmesssignals ($\dot{\varphi}_{mess,i}$, $t_{mess,i}$) ein die Energie des Kurbelwelletriebs repräsentierender erster Energiewert ($\widetilde{E}_{mess,i}$) ermittelt wird, und
    - aus dem Drucksignal ($p_{LZ,i}$) ein die Energie des Kurbelwellentriebs repräsentierender zweiter Energiewert ($\widetilde{E}_{tat,i}$) ermittelt wird, und
    - die Bildung der Korrekturgröße ($\Delta\varphi_i$) abhängig von dem ersten und dem zweiten Energiewert stattfindet, wobei insbesondere vorgesehen ist, dass die Bildung der Korrekturgröße ($\Delta\varphi_i$) abhängig von der Differenz zwischen dem ersten und dem zweiten Energiewert stattfindet.

2.  Verfahren nach Anspruch 1, **dadurch gekennzeichnet, dass** die Bildung der Korrekturgröße ($\Delta\varphi_i$) wenigstens abhängig von dem gleichzeitig erfassten Drucksignal ($p_{LZ,i}$) und Drehmesssignal ($\dot{\varphi}_{mess,i}$, $t_{mess,i}$) stattfindet.

3.  Verfahren nach Verfahren nach einem der vorhergehenden Ansprüchen, **dadurch gekennzeichnet, dass** das Drucksignal ($p_{LZ,i}$) wenigstens während eines vorgebbaren Betriebszustandes der Brennkraftmaschine erfasst wird und die Bildung der Korrekturgröße ($\Delta\varphi_i$) wenigstens abhängig von dem während eines vorgebbaren Betriebszustands der Brennkraftmaschine erfassten Drucksignals ($p_{LZ,i}$) und Drehmesssignals ($\varphi_{mess,i}$, $t_{mess,i}$) stattfindet.

**4.** Verfahren nach einem der vorhergehenden Ansprüchen, **dadurch gekennzeichnet, dass** der vorgebbare Betriebszustand ein stationärer Schleppbetrieb der Brennkraftmaschine ist.

**5.** Verfahren nach einem der vorhergehenden Ansprüchen, **dadurch gekennzeichnet, dass** der vorgebbare Betriebszustand ein Betriebszustand ist, während dem Störungen bestimmten Ausmaßes wie das Befahren einer Schlechtwegstrecke oder starke Störschwingungen nicht auftreten.

**6.** Verfahren nach einem der vorhergehenden Ansprüchen, **dadurch gekennzeichnet, dass** die über eine vorgebbare Anzahl von Verbrennungsvorgängen gebildeten Korrekturgrößen zu einer resultierenden Korrekturgröße, insbesondere durch Mittelwertbildung, zusammengefaßt werden und die Ermittelung des Winkellagesignals ($\dot{\varphi}_i$) durch Verknüpfen des erfassten Drehmesssignals ($\dot{\varphi}_{mess,j}$, $t_{mess,i}$) mit der resultierenden Korrekturgröße geschieht.

**7.** Verfahren nach einem der vorhergehenden Ansprüchen, **dadurch gekennzeichnet, dass** die Brennkraftmaschine wenigstens zwei Brennräume aufweist, wobei wenigstens einer der Brennräume keinen Drucksensor aufweist, wobei insbesondere nur ein einziger Drucksensor vorgesehen ist.

**8.** Verfahren nach wenigstens einem der vorhergehenden Ansprüche, **dadurch gekennzeichnet, dass** die Brermkraftmaschine wenigstens drei Brennräume aufweist, wobei wenigstens einer der Brennräume keinen Drucksensor aufweist, wobei insbesondere nur zwei Drucksensoren in den Brennräumen vorgesehen sind, in denen die Verbrennungsvorgange nacheinander ablaufen.

**9.** Verfahren nach einem der vorhergehenden Ansprüche, **dadurch gekennzeichnet, dass** die Bildung der Korrekturgröße weiterhin abhängig von der während der Erfassung vorliegenden Last der Brennkraftmaschine und/oder abhängig von der während der Erfassung vorliegenden Drehzahl der Brennkraftmaschine geschieht.

**10.** Verfahren nach einem der vorhergehenden Ansprüche, **dadurch gekennzeichnet, dass** die Korrekturgröße ($\Delta\varphi_i$) in einem Speicher (20) abgelegt wird und die Ermittelung des Winkellagesignals ($\dot{\varphi}_i$) durch Verknüpfen des erfassten Drehmesssignals ($\dot{\varphi}_{mess,i}$, $t_{mess,i}$) mit der Korrekturgröße ($\Delta\varphi_i$) im laufenden Betrieb der Btennkrat-ünaschine durchführt wird.

**11.** Vorrichtung zur Durchführung des Verfahrens nach wenigstens einem der vorhergehenden Ansprüche, mit folgenden Mittel zur:

- Erfassen des Drucksignals ($p_{LZ,i}$),
- Erfassen des Drehmesssignals ($\dot{\varphi}_{mess,i}$, $t_{mess,i}$),
- Bildung einer Korrekturgröße ($\Delta\varphi_i$) wenigstens abhängig von dem erfassten Drucksignal und Drehmesssignal, und
- Ermitteln des Winkellagesignals ($\dot{\varphi}_i$) durch Verknüpfen des erfassten Drehmesssignals ($\dot{\varphi}_{mess,i}$, $t_{mess,i}$) mit der Korrekturgröße ($\Delta\varphi_i$), **dadurch gekennzeichnet, dass**
- aus dem Drehmesssignals ($\dot{\varphi}_{mess,i}$, $t_{mess,i}$) ein die Energie des Kurbelwellentriebes repräsentierender erster Energiewert ($\widetilde{E}_{mess,i}$) ermittelt wird, und
- aus dem Drucksignal ($p_{LZ,i}$) ein die Energie des Kurbelwellentriebs repräsentierender zweiter Energiewert ($\widetilde{E}_{tat,i}$) ermittelt wird, und
- die Bildung der Korrekturgröße ($\Delta\varphi_i$) abhängig von dem ersten und dem zweiten Energiewert stattfindet, wobei insbesondere vorgesehen ist, dass die Bildung der Korrekturgröße ($\Delta\varphi_i$) abhängig von der Differenz zwischen dem ersten und dem zweiten Energiewert stattfindet.

## Claims

**1.** Method for determining an angular position signal ($\dot{\varphi}_i$), which represents the rotary movement of a rotating part of an internal combustion engine, using a rotation speed sensor (11) which emits a measured rotation signal ($\dot{\varphi}_{measured,j}$, $t_{easured,i}$), which represents the rotary movement of a transmitter wheel which is connected to the rotating part, and at least one pressure sensor (12) which emits a pressure signal ($p_{LZ,i}$) which represents the pressure in a combustion chamber, comprising the following steps:

- acquiring the pressure signal ($p_{LZ,i}$),
- acquiring the measured rotation signal ($\dot{\varphi}_{measured,j}$, $t_{measured, i}$),

- forming a correction variable ($\Delta\varphi_i$) at least as a function of the acquired pressure signal and measured rotation signal, and
- determining the angular position signal ($\dot{\varphi}_i$) by combining the acquired measured rotation signal ($\dot{\varphi}_{measured,j}$, $t_{measured,i}$) with the correction variable ($\Delta\varphi_i$), **characterized in that**
- a first energy value ($\tilde{E}_{measure,j}$) which represents the energy of the crankshaft drive is determined from the measured rotation signal ($\dot{\varphi}_{measured,j}$, $t_{measured,i}$), and
- a second energy value ($\tilde{E}_{actual,i}$) which represents the energy of the crankshaft drive is determined from the pressure signal ($p_{LZ,i}$), and
- the correction variable ($\Delta\varphi_i$) is formed as a function of the first and the second energy value, with provision being made, in particular, for the correction variable ($\Delta\varphi_i$) to be formed as a function of the difference between the first and the second energy value.

2. Method according to Claim 1, **characterized in that** the correction variable ($\Delta\varphi_i$) is formed at least as a function of the simultaneously acquired pressure signal ($p_{LZ,i}$) and measured rotation signal ($\dot{\varphi}_{measured,j}$, $t_{measured,i}$).

3. Method according to one of the preceding claims, **characterized in that** the pressure signal ($p_{LZ,i}$) is acquired at least during a predefinable operating state of the internal combustion engine, and the correction variable ($\Delta\varphi_i$) is formed at least as a function of the pressure signal ($p_{LZ,i}$), which is acquired during a predefinable operating state of the internal combustion engine, and the measured rotation signal ($\dot{\varphi}_{measured,j}$, $t_{measured,i}$),

4. Method according to one of the preceding claims, **characterized in that** the predefinable operating state is a stationary overrun operating mode of the internal combustion engine.

5. Method according to one of the preceding claims, **characterized in that** the predefinable operating state is an operating state during which disturbances of a certain magnitude, such as travelling on a road of poor quality or severe disturbance vibrations, do not occur.

6. Method according to one of the preceding claims, **characterized in that** the correction variables which are formed by means of a predefinable number of combustion processes are combined to form a resulting correction variable, in particular by taking an average value, and the angular position signal ($\dot{\varphi}_i$) is determined by combining the acquired measured rotation signal ($\dot{\varphi}_{measured,j}$, $t_{measured,i}$) with the resulting correction variable.

7. Method according to one of the preceding claims, **characterized in that** the internal combustion engine has at least two combustion chambers, with at least one of the combustion chambers not having a pressure sensor, in particular with only one single pressure sensor being provided.

8. Method according to at least one of the preceding claims, **characterized in that** the internal combustion engine has at least three combustion chambers, with at least one of the combustion chambers not having a pressure sensor, in particular with only two pressure sensors being provided in the combustion chambers and the combustion processes running one after the other in the said combustion chambers.

9. Method according to one of the preceding claims, **characterized in that** the correction variable is further formed as a function of the load on the internal combustion engine which is present during acquisition and/or as a function of the rotation speed of the internal combustion engine which is present during acquisition.

10. Method according to one of the preceding claims, **characterized in that** the correction variable ($\Delta\varphi_i$) is stored in a memory (20) and the angular position signal ($\dot{\varphi}_i$) is determined by combining the acquired measured rotation signal ($\dot{\varphi}_{measured,j}$ $t_{measured,i}$) with the correction variable ($\Delta\varphi_i$) during continuous operation of the internal combustion engine.

11. Apparatus for carrying out the method according to at least one of the preceding claims, comprising the following means for:

- acquiring the pressure signal ($p_{LZ,i}$),
- acquiring the measured rotation signal ($\dot{\varphi}_{measured,j}$, $t_{measured,i}$),
- forming a correction variable ($\Delta\varphi_i$) at least as a function of the acquired pressure signal and measured rotation signal, and
- determining the angular position signal ($\dot{\varphi}_i$) by combining the acquired measured rotation signal ($\dot{\varphi}_{measured,j}$, $t_{measured,i}$) with the correction variable ($\Delta\varphi_i$), **characterized in that**

- a first energy value ($\tilde{E}_{measure,j}$) which represents the energy of the crankshaft drive is determined from the measured rotation signal ($\dot{\varphi}_{measured,j}$, $t_{measured,i}$), and
- a second energy value ($\tilde{E}_{actual,i}$) which represents the energy of the crankshaft drive is determined from the pressure signal ($p_{LZ,i}$), and
- the correction variable ($\Delta\varphi_i$) is formed as a function of the first and the second energy value, with provision being made, in particular, for the correction variable ($\Delta\varphi_i$) to be formed as a function of the difference between the first and the second energy value.

## Revendications

1. Procédé pour déterminer un signal de position angulaire ($\dot{\varphi}_i$) représentant le mouvement de rotation d'une partie rotative d'un moteur à combustion interne avec un détecteur de vitesse de rotation (11), lequel délivre un signal de mesure de rotation ($\dot{\varphi}_{mes,i}$, $t_{mes,i}$) représentant le mouvement de rotation d'une roue de codeur reliée avec la partie rotative, et au moins un capteur de pression (12) qui délivre un signal de pression ($P_{LZ,i}$) représentant la pression dans une chambre de combustion, comprenant les étapes suivantes :

   - acquisition du signal de pression ($P_{LZ,i}$),
   - acquisition du signal de mesure de rotation ($\varphi_{mes,i}$, $t_{mes,i}$),
   - calcul d'une grandeur de correction ($\Delta\varphi_i$) au moins en fonction du signal de pression et du signal de mesure de rotation acquis et
   - détermination du signal de position angulaire ($\dot{\varphi}_i$) en combinant le signal de mesure de rotation ($\dot{\varphi}_{mes,i}$, $t_{mes,i}$) acquis avec la grandeur de correction ($\Delta\varphi_i$), **caractérisé en ce que**
   - une première valeur d'énergie ($\tilde{E}_{mes,i}$) représentant l'énergie d'entraînement du vilebrequin est déterminée à partir du signal de mesure de rotation ($\dot{\varphi}_{mes,i}$, $t_{mes,i}$) et
   - une deuxième valeur d'énergie ($\tilde{E}_{réelle,i}$) représentant l'énergie d'entraînement du vilebrequin est déterminée à partir du signal de pression ($P_{LZ,i}$) et
   - le calcul de la grandeur de correction ($\Delta\varphi_i$) est effectué en fonction de la première et de la deuxième valeurs d'énergie en prévoyant notamment que le calcul de la grandeur de correction ($\Delta\varphi_i$) est effectué en fonction de la différence entre la première et la deuxième valeurs d'énergie.

2. Procédé selon la revendication 1, **caractérisé en ce que** le calcul de la grandeur de correction ($\Delta\varphi_i$) est effectué au moins en fonction du signal de pression ($P_{LZ,i}$) et du signal de mesure de rotation ($\dot{\varphi}_{mes,i}$, $t_{mes,i}$) acquis simultanément.

3. Procédé selon l'une des revendications précédentes, **caractérisé en ce que** le signal de pression ($P_{LZ,i}$) est acquis au moins pendant un état de fonctionnement pouvant être prédéfini du moteur à combustion interne et le calcul de la grandeur de correction ($\Delta\varphi_i$) est effectué au moins en fonction du signal de pression ($P_{LZ,i}$) et du signal de mesure de rotation ($\dot{\varphi}_{mes,i}$, $t_{mes,i}$) acquis pendant un état de fonctionnement pouvant être prédéfini du moteur à combustion interne.

4. Procédé selon l'une des revendications précédentes, **caractérisé en ce que** l'état de fonctionnement pouvant être prédéfini est un mode de traction stable du moteur à combustion interne.

5. Procédé selon l'une des revendications précédentes, **caractérisé en ce que** l'état de fonctionnement pouvant être prédéfini est un état de fonctionnement pendant lequel il ne se produit pas de perturbations d'un certain niveau telles que le déplacement sur une portion de voie en mauvais état ou de fortes oscillations parasites.

6. Procédé selon l'une des revendications précédentes, **caractérisé en ce que** les grandeurs de correction calculées sur un nombre pouvant être prédéfini d'opérations de combustion sont assemblées pour former une grandeur de correction résultante, notamment par un calcul de la valeur moyenne, et la détermination du signal de position angulaire ($\dot{\varphi}_i$) s'effectue en combinant le signal de mesure de rotation ($\dot{\varphi}_{mes,i}$, $t_{mes,i}$) acquis avec la grandeur de correction résultante.

7. Procédé selon l'une des revendications précédentes, **caractérisé en ce que** le moteur à combustion interne présente au moins deux chambres de combustion, au moins l'une des chambres de combustion ne présentant pas de capteur de pression, un seul capteur de pression étant notamment prévu.

**8.** Procédé selon au moins l'une des revendications précédentes, **caractérisé en ce que** le moteur à combustion interne présente au moins trois chambres de combustion, au moins l'une des chambres de combustion ne présentant pas de capteur de pression, deux capteurs de pression seulement étant notamment prévus dans les chambres de combustion dans lesquelles les opérations de combustion se déroulent l'une après l'autre.

**9.** Procédé selon l'une des revendications précédentes, **caractérisé en ce que** le calcul de la grandeur de correction est en outre effectué en fonction de la charge du moteur à combustion interne présente pendant l'acquisition et/ou en fonction de la vitesse de rotation du moteur à combustion interne présente pendant l'acquisition.

**10.** Procédé selon l'une des revendications précédentes, **caractérisé en ce que** la grandeur de correction ($\Delta\varphi_i$) est stockée dans une mémoire (20) et la détermination du signal de position angulaire ($\dot\varphi_i$) s'effectue en combinant le signal de mesure de rotation ($\dot\varphi_{mes,i}$, $t_{mes,i}$) acquis avec la grandeur de correction ($\Delta\varphi_i$) en cours de fonctionnement du moteur à combustion interne.

**11.** Dispositif pour mettre en oeuvre le procédé selon au moins l'une des revendications précédentes, comprenant les moyens suivants pour :

- acquérir le signal de pression ($P_{LZ,i}$),
- acquérir le signal de mesure de rotation ($\dot\varphi_{mes,i}$, $t_{mes,i}$),
- calculer une grandeur de correction ($\Delta\varphi_i$) au moins en fonction du signal de pression et du signal de mesure de rotation acquis et
- déterminer le signal de position angulaire ($\dot\varphi_i$) en combinant le signal de mesure de rotation ($\dot\varphi_{mes,i}$, $t_{mes,i}$) acquis avec la grandeur de correction ($\Delta\varphi_i$), **caractérisé en ce que**
- une première valeur d'énergie ($E_{mes,i}$ représentant l'énergie d'entraînement du vilebrequin est déterminée à partir du signal de mesure de rotation ($\dot\varphi_{mess,i}$, $t_{mes,i}$) et
- une deuxième valeur d'énergie ($E_{réelle,i}$) représentant l'énergie d'entraînement du vilebrequin est déterminée à partir du signal de pression ($P_{LZ,i}$) et
- le calcul de la grandeur de correction ($\Delta\varphi_i$) est effectué en fonction de la première et de la deuxième valeurs d'énergie en prévoyant notamment que le calcul de la grandeur de correction ($\Delta\varphi_i$) est effectué en fonction de la différence entre la première et la deuxième valeurs d'énergie.

Figur 1

EP 1 723 331 B1

Figur 2

Figur 3

Figur 4

EP 1 723 331 B1

Figur 5

Figur 6

EP 1 723 331 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10017107 A1
- DE 19733958 A1
- WO 0177692 A

- DE 10107892 A1
- WO 03062620 A
- US PS5611311 A